# EUROPEAN PATENT SPECIFICATION

(11) **EP 2 031 434 B1**
(45) Date of publication and mention of the grant of the patent: **19.10.2022**
(21) Application number: 07301754.3
(22) Date of filing: 28.12.2007
(51) Int. Cl.: G02C 13/00

(54) **An asynchronous method for obtaining spectacle features to order**
Asynchrones Verfahren zur Erhaltung von Brilleneigenschaften nach Maß
Procédé synchrone pour obtenir des fonctions de lunettes à commander

(43) Date of publication of application: 04.03.2009
(73) Proprietor: Essilor International, 94220 Charenton-le-Pont (FR)
(72) Inventor: Suy, Saurphéa, 94220 Charenton-le-Pont (FR); Clara, Phillippe, 94220 Charenton-le-Pont (FR); Chailley, Sébastien, 94220 Charenton-le-Pont (FR)
(74) Representative: Plasseraud IP

(56) References cited:
- EP-A- 1 475 187
- EP-A- 1 767 983
- EP-A1- 1 336 924
- US-A- 5 926 247
- US-A- 5 960 411
- US-A- 5 983 201
- US-A1- 2001 023 413
- US-A1- 2002 176 052
- US-A1- 2003 090 625
- US-A1- 2005 122 472
- US-A1- 2007 118 428
- US-B1- 6 637 880

## Description

The present invention relates to a method according to claim 1, a server according to claim 11, a software product according to claim 12 or claim 13, and a system according to claim 14.

Usually, a person needing to wear spectacles and having thus a prescription filled by an ophthalmologist or by another authorized eye care professional goes to the premise of an optician for choosing the frame of the future spectacles. The future wearer of the spectacles may try several spectacle frames and finally chooses one of the tried frames.

Usually, the optician performs measurements on the wearer while he is trying the chosen spectacle frames. These measurements are required to finalize the lens order when the lenses are to be delivered edged.

Usually, the inner circumference of the openings of the chosen frame (e.g. the openings of the frame where spectacle lenses are intended to be mounted) is measured very precisely by a mechanical sensor. More particularly, the openings of the frame include an inner rim and the characteristics of the rim (3D-shape of the rim, tilt angle with the openings, depth of the rim, etc.) are measured by the aforesaid mechanical sensor in a measuring room. The measurements performed by the mechanical sensor on the chosen frame make it possible to order spectacle lenses which fit the best the chosen frame, on the one hand, and the wearer prescription, on the other hand. More particularly, according to the measurements performed by the mechanical sensor and the optician in the measuring room, the optician and/or the provider of spectacle lenses are able to:
- specify the edging job (shape, finishing options, etc.);
- cut the edges of the lenses for fitting with the mechanical measurements performed on the chosen frame; and
- provide spectacle lenses adapted to the wearer and the chosen frame.

The lenses provider has to ensure that the provided lenses would be adapted to the wearer and to the chosen frame. For example, the lenses provider has to ensure that the future lenses can effectively be mounted on the chosen frame which may have particular openings and rims.

It will be thus understood that the measurements performed on the inner circumference openings of the chosen frame is an important set of features to take into account for the lenses provider.

US 2007/0118428 discloses an example of a method implemented by computer means for providing a spectacle frame adapted to a future wearer of said spectacle frame.

Therefore, usually, the mechanical measurements are performed on the frame that has been chosen by the wearer and exactly this frame. In fact, slight differences of mechanical features can be measured on two different frames of a same model and a same size. However, the lenses choice and their edging have to be very accurate and are very sensitive to those slight differences. It is thus highly preferable to carry out mechanical measurements on the frame which will be provided to the wearer with the lenses.

However, the exact frame which is intended to be provided to the wearer may not be available in the optician premise, at the moment when the wearer has chosen the frame. For example, the wearer may choose and try the model and the size of the frame but the color that the wearer prefers may not be available. The optician can measure centering parameters with an available frame tried by the wearer and write down manually the choice of the wearer and the measures performed when the wearer tried the available frame in the optician premise. In a second time, when the final frame is available (chosen model, chosen size, chosen color), the optician can measure the final frame and fill in the lens order. However, such an implementation is a source of delays (waiting for the final frame to arrive in the optician premise) and mistakes (linked to the manual process) and, thus provides a bad service to the wearer.

Moreover, the optician premise and the measuring room (and the spectacle frame inventory) may be located at different distant places. The optician may send to the measuring room the features of the frame chosen and tried by the wearer and all the order data in order to perform the measurements on the final frame of the exact model chosen by the wearer and to fill in the complete order. However, this implementation is again a source of mistakes and inconvenience as order data shall be transmitted manually between the optician premise and the measuring room.

US 5 926 247 A discloses the combination of features recited in the preamble of claim 1. The present invention aims to improve the situation.

To this end, it proposes a method according to claim 1, a server according to claim 11, a software product according to claim 12 or claim 13, and a system according to claim 14.

Other features and advantages of the invention will become apparent on reading the following detailed specification and examining the appended drawings, in which:
- figure 1 is a diagram showing the interactions between the computer entities and the server involved in a method according to the invention;
- figure 2A and figure 2B are respectively front elevation and side elevation of the chosen frame F, showing in particular parameters to be measured for constituting the aforesaid first set of data;
- figure 3A and figure 3B are respectively a front elevation and a cross-section view of the frame to provide F' (according to the trim mark II of figure 3A), showing in particular parameters to measure for constituting the aforesaid second set of data; and
- figures 4A-4D show steps of the method performed by a server according to the invention, in an advantageous embodiment.

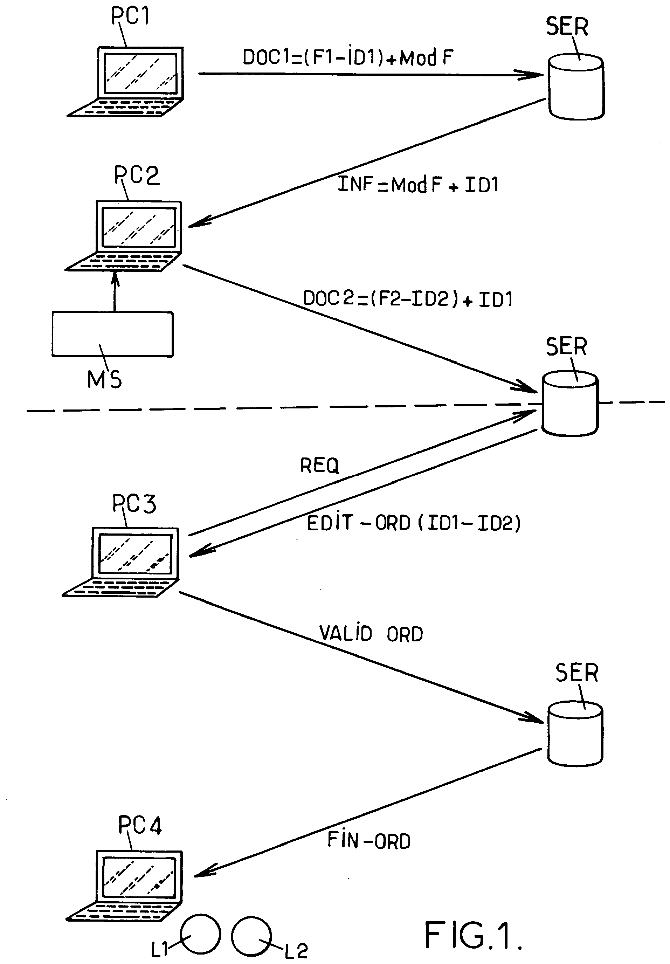

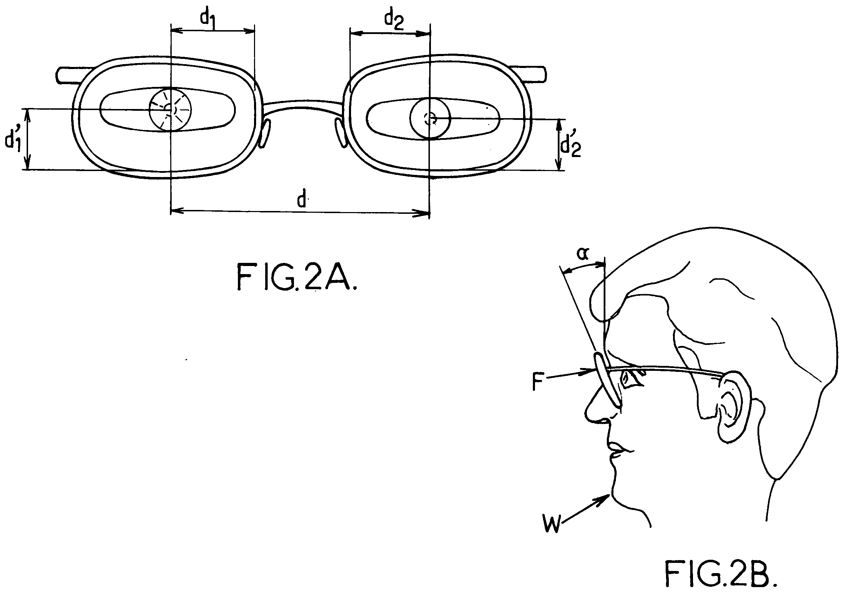

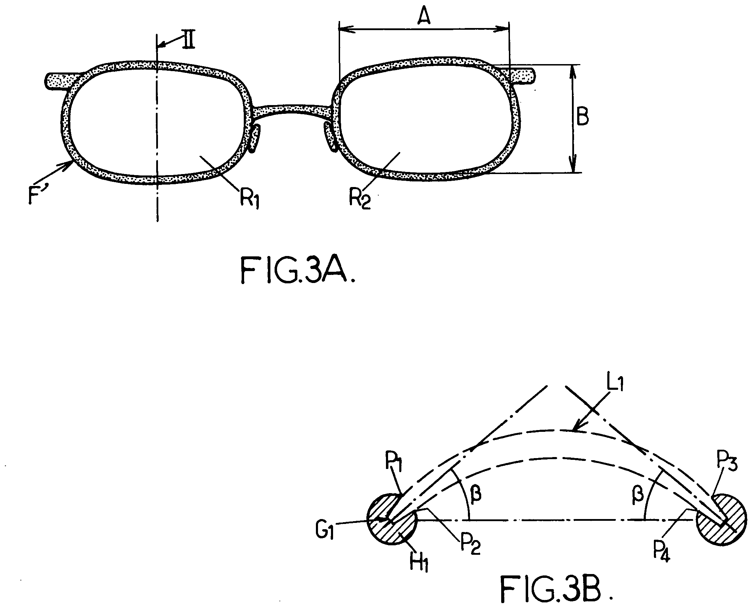

It is described hereafter a particular embodiment where the measurements performed on the wearer w (figure 2B) are carried out in a first location provided with a first computer entity PC1, while the measurements performed on the spectacle frame F' (figures 3A - 3B) to provide are carried out in a second location, provided with a second computer entity PC2. With reference to figure 1, the first computer entity PC1, the second computer entity PC2 and the server SER are linked together via an extended network such as the Internet.

The measurements performed on the wearer w are stored in a computer file F1 constituting thus the aforesaid first set of data. To this end, the first computer entity PC1 comprises a memory for saving this first computer file F1. The computer entity PC1 includes also processing means for assigning to this first computer file F1 a name corresponding to the aforesaid first identifier ID1. Therefore, the first computer entity PC1 sends this first computer file F1 to the server SER along with the first identifier ID1 (for example as a name of the file F1). The first computer entity PC1 sends also, along with the first file F1, an identifier Mod F of a model of a frame tried and chosen by the wearer.

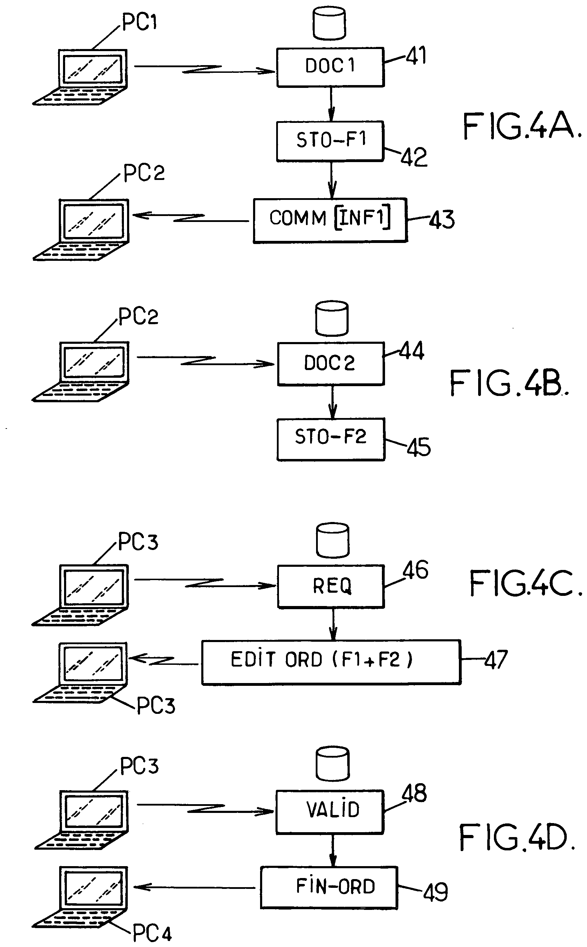

Therefore, the entity PC1 sends to the server a document DOC1 including the file F1 comprising the first set of data and the identifier Mod F of the model chosen by the wearer (step 41 of figure 4A). In step 42 of figure 4A, the server stores in a memory (non-volatile memory) the file F1 and the identifier Mod F. Then, the server, at step 43, sends to the second entity PC2 information combining the first identifier ID1 to the identifier Mod F of the chosen frame. In another embodiment, the second computer entity PC2 may require from the server a list of waiting orders and an operator of the second computer entity PC2 may select one order in this list, for example for performing measurements on a frame to provide which is available in a premise where the second entity PC2 is located.

Thus, the second entity PC2 recovers from the server SER the first identifier ID1 along with the identifier Mod F of the chosen frame in step 43 of figure 4A. On the basis of the identifier Mod F of the chosen frame, an operator of the second computer entity PC2 uses a mechanical sensor MS to perform measurements on a frame F' to provide to the wearer w, this frame F' (figures 3A - 3B) to be provided to the wearer being at least of a same model as the frame F (figures 2A - 2B) tried and chosen by the wearer w. Once the measurements are performed on the frame F' to provide, the measured values are stored in a second computer file F2. To this end, the second entity PC2 comprises a memory for saving this second computer file F2 comprising the aforesaid second set of data. The second computer entity PC2 comprises also processing means for assigning to the second computer file F2 a name corresponding for example to the aforesaid second identifier ID2.

Then, the second computer entity PC2 sends to the server SER the second set of data F2 along with the first identifier ID1 and the second identifier ID2 in the document DOC2 of figure 1 (step 44 of figure 4B). The server stores the second computer file F2 in step 45 of figure 4B. More particularly, the server, upon reception of this second document DOC2 is able to associate the first computer file F1 having a name corresponding to the first identifier ID1 and the second computer file F2 having a name corresponding to the second identifier ID2, making it possible to build an order form including data of the first set F1 and data of the second set F2.

In a particular embodiment, documents DOC1 and DOC2 can be in the form of html pages comprising tags corresponding to the aforesaid identifiers ID1, ID2, Mod F, and pointing at computer files F1, F2.

The aforesaid first set of data F1 includes data relative to a combination of the wearer w and the chosen frame F (for example heights d'1 and d'2 (figure 2A) between each wearer pupil and a horizontal edge of the openings of the chosen frame (called "fitting point height *h"* according to the specification ISO 13666), distances d1 and d2 between each wearer pupil and a vertical edge of the openings of the chosen frame (figure 2A), a pantoscopic angle α (figure 2B) between the vertical plan and the chosen frame F when the wearer w tries the spectacle frames, etc.).

The first set of data F1 may include also, for example, the width A and the height B of each rim of the frame F', as shown on figure 3A. However, it is preferred to carry out these measurements directly on the frame F' to provide and the values of these measurements may rather be included in the second set of data F2.

It is to be noted that the pupillary distance d measured on the wearer w makes it possible to position the optical centers in the frame in order to determine exactly the lens centering. The measurement of the coefficient of motion of an eye relatively to a global motion of the head makes it possible to determine lens design in order to adapt the look of the wearer according to his propensity to move the head or the eyes when looking in another direction.

Finally, the measurements stored in file F1 makes it possible to determine the centering of the lenses to provide with the spectacle frame of a same model and size of the chosen and tried one.

The aforesaid second set of data F2 is related to the frame F' which is intended to be provided finally to the wearer. It may include in particular the values of the inner circumference measurements performed on the frame to provide by a mechanical sensor MS.

In an embodiment described here as an example, each spectacle lens L1 is intended to be mounted on a rim H1 delimiting an opening R1 of the frame F' to provide (figure 3B). Thus, the aforesaid second set of data F2 may include for example an inner circumference measurement of the respective rims of the first and second openings R1, R2. More particularly, the second set of data may include for example:
- dimension measurements of an internal groove G1 formed in the inner circumference of a rim H1 (figure 3B),
- a measurement of an angle between a principal axis of the groove G1 and a principal axis of the rim H1 (i.e. a tilt angle β of the groove G1 relatively to the opening R1 intended to receive lens L1 in figure 3B).
The tilt angle β can be determined from the coordinate measurements of four points PI, P2, P3 and P4 as shown in the example of figure 3B.

The second set of data F2 may include also the width A and the height B of the rims of the frame to provide F', if these data are not included already in the first set of data F1 as explained above.

Of course, the type of the chosen frame (for example a fully rimmed frame, or a semirimmed frame or a rimless frame) may be also a data to be included in the first set F1 or in the second set F2.

Referring again to figure 1, the server SER, upon a request REQ received from a distant computer entity PC3, is able to send to this computer entity PC3 data enabling an edition ("EDIT-ORD(ID1-ID2)") by the computer entity PC3 of a computer document including the data of the first and second sets. This computer entity PC3 can be located in an optician premise that may be different from the previous two locations and is able to generate, upon reception from the server SER of the data enabling the aforesaid edition, an order form including both:
- data related to measurements performed on the wearer w, on the one hand, and
- data related to measurements performed on the spectacle frame to provide F', on the other hand.

This computer entity PC3 can thus consult, online, the content of a list of waiting orders and, more particularly, can complete and validate an order form including the first and second data sets. In an advantageous embodiment, the server SER comprises processing means to calculate an optimum shape of the lenses to provide, according to the wearer measurements (including the prescriptions of the wearer) and the measurements performed on the frame to provide. Therefore, the order form may include characteristics of spectacle lenses intended to be mounted on the frame F' to provide, as well as characteristics for edging these spectacle lenses, these lenses fitting both the features of the wearer and the features of the frame F'.

It is to be noted that the computer entity PC3 can be the same as the first computer entity PC1. Therefore, the optician may run his computer entity PC1 (or PC3) for requesting the edition of an order form (step 46 of figure 4C). At step 47 of figure 4C, the optician can read on his computer screen (PC1 or PC3) the order form characteristics presented by the server. If the optician validates the order form (step 48 of the figure 4D), the server SER transmits the order form to a lens provider computer entity PC4 for ordering the pair of lenses L1 and L2 fitting both the wearer features and the features of the frame F' to provide (step 49 of figure 4D).

According to an advantage provided by the invention, all the asynchronous steps of the spectacle ordering (frame ordered by the wearer, measurements on the frame to provide, choice of the lenses to provide) are organized and centralized by the server. It is to be noted also that the server is able to store all the measurements and data (computer files F1 and F2) in the whole ordering process. Thus, it will be understood that the storage of computer files F1 and F2, respectively by computer entities PC1 and PC2, can be volatile (for example a storage in a volatile memory).

The present invention aims also at a server comprising the features recited in claim 11.

The present invention aims also at a software product according to claim 12 In particular, the software comprises instructions for implementing the invention as described above with reference to figures 4A-4D.

The present invention aims also at a software product according to claim 13. This software product comprises instructions for implementing the steps of the method described above with reference to figure 1.

The invention aims also at a system according to claim 14.

It has been described hereinafter documents DOC1 and DOC2 having the form of html pages. As a variant, a directory having a name corresponding to an identifier of the spectacles order may include two files F1 and F2 respectively corresponding to the first and second sets of data and having names corresponding respectively to the first and second identifiers. Such a directory can be transmitted for example from entity PC2 to the server, instead of an html page DOC2.

It is to be noted that computer entities PC1 and PC3 can be a same computer entity in the optician premise as explained above. It will be thus appreciated that the data storage can be entrusted to a distant server, according to the invention.

It will be understood also that the chosen frame F and the frame to provide F' can be a same and unique frame. The implementation of the invention can be advantageous again simply for entrusting the data storage to a distant server.

## Claims

1. A method implemented by computer means, for providing a computer document representing a spectacle frame (F') adapted to a future wearer (w) of said spectacle frame,
wherein the method comprises the steps of:
- storing in a memory of a server (SER) a first set of data (F1) related to measurements (d, δ, α) performed on said wearer (w), in correspondence to a first identifier (ID1), - storing in the memory of said server (SER) a second set of data (F2) related to measurements (R1, R2) performed on said spectacle frame (F'), in correspondence to a second identifier (ID2),
and wherein the server (SER), upon reception of a piece of information (DOC2) indicating an association between said first and second identifiers, is arranged for compiling a computer document (ORD(ID1-ID2)) including at least a part of said first and second sets of data,
**characterized in that**:
said spectacle frame (F') on which measurements are performed is at least of a same model as a spectacle frame (F) tried and chosen by said wearer,
wherein said measurements (d, α) performed on said wearer (w) and said measurements (R1, R2) performed on said spectacle frame (F') are carried out respectively at two distinct and remote locations, respectively provided with a first computer entity (PC1) and a second computer entity (PC2), said first and second computer entities being linked with said server (SER) via an extended network, and said first set of data (F1) includes data relative to a combination of the wearer (w) and said chosen frame (F) and comprises at least one element amongst:
- a height (d'1,d'2) between a pupil of the wearer and a horizontal edge of said chosen frame (F),
- a distance (d1,d2) between a pupil of the wearer and a vertical edge of said chosen frame (F), and
- a pantoscopic angle (α) between the face of the wearer and said chosen frame (F).

2. The method according to claim 1, wherein said server (SER) is arranged, upon a request (REQ) received from a distant computer entity (PC3), for sending to said distant computer entity (PC3) data (EDIT-ORD(ID1-ID2)) enabling an edition by said distant computer entity (PC3) of said computer document.

3. The method according to claim 2, wherein said computer entity (PC3) is located in an optician premises and is able to generate, upon reception from the server of said data enabling an edition of said computer document, an order form including both:
- data related to measurements performed on the wearer, on the one hand, and
- data related to measurements performed on the spectacle frame, on the other hand.

4. The method according to claim 3, wherein the data included in said order form define spectacle lenses intended to be mounted on said frame (F') to provide, as well as characteristics for edging said spectacle lenses.

5. The method according to claim 4, wherein said order form, upon allowance by the optician, is transmitted by said server (SER) to a lens provider computer entity (PC4).

6. The method according to anyone of the precedent claims, wherein said first set of data (F1) further includes data relative only to the wearer (w) and comprises at least one element amongst:
- a pupillary distance (d) of the wearer,
- a prescription of the wearer filled by an ophthalmologist,
- a coefficient of motion of an eye relatively to a global motion of the head.

7. The method according to anyone of the precedent claims, wherein said first set of data (F1) is sent (DOC1) to the server (SER) along with said first identifier (ID1) and an identifier of a model of said chosen frame (Mod F).

8. The method according to any of the precedent claims, first and second spectacle lenses being intended to be mounted on respective first (R1) and second (R2) rims of the spectacle frame to provide (F'), wherein said second set of data (F2) comprises at least one element amongst:
- an inner circumference measurement of said first and second rims,
- a dimension measurement of an internal groove formed in said inner circumference of the rims,
- a measurement of an angle between a principal axis of said groove and a principal axis of a rim.

9. The method according to claim 8, wherein said second set of data (F2) is sent (DOC2) to said server (SER) along with said first (ID1) and second (ID2) identifiers, providing thus said piece of information indicating an association between said first and second identifiers.

10. The method according to anyone of the precedent claims, wherein:
- the first computer entity (PC1) sends the first set of data (F1) to the server (SER) along with said first identifier (ID1) and an identifier of a model of a frame tried and chosen by the wearer (Mod F),
- the second computer entity (PC2) recovers from the server said first identifier (ID1) along with the identifier of said chosen frame (Mod F),
- on the basis of said identifier of the chosen frame (Mod F), the second computer entity (PC2) orders measurements on a frame (F') to be provided to the wearer (w), said frame (F') to be provided being at least of a same model as the frame (F) tried and chosen by the wearer, and
- the second computer entity (PC2) sends said second set of data (F2) to the server (SER) along with said first (ID1) and second (ID2) identifiers, providing thus to the server said piece of information indicating an association between said first and second identifiers.

11. A server for implementing the method according to any of the precedent claims, comprising:
^{∗} a memory for storing:
- a first set of data (F1-ID1) related to measurements (d, α) performed on said wearer (w), in correspondence to a first identifier (ID1), and
- a second set of data (F2-ID2) related to measurements (R1, R2) performed on said spectacle frame (F'), in correspondence to a second identifier (ID2),
^{∗} and processing means being adapted for, upon reception of a piece of information (DOC2) indicating an association between said first and second identifiers, compiling a computer document (ORD(ID1-ID2)) including at least said first and second sets of data.

12. A software product adapted to be stored in a memory of a processor unit of a server according to claim 11, or in a removable memory medium adapted to cooperate with a reader of the processor unit of the server,
comprising instructions for implementing the method according to any of claims 1 to 10.

13. A software product adapted to be stored in a memory of a processor unit of a computer entity, or in a removable memory medium adapted to cooperate with a reader of the processor unit of the computer entity,
comprising instructions for implementing the method according to any of claims 2, 3, 4, 5, 7, 9 and 10.

14. A system for implementing the method according to any of claims 1 to 10, comprising a server according to claim 11 and at least one computer entity (PC1, PC2, PC3) comprising instructions for implementing the method according to any of claims 1 to 10.

## Patentansprüche

1. Verfahren, das mit Mitteln eines Computers zum Vorsehen eines Computerdokuments implementiert wird, das eine Brillenfassung (F') repräsentiert, die an einen zukünftigen Träger (w) der Brillenfassung angepasst ist, wobei das Verfahren die folgenden Schritte umfasst:
- Speichern eines ersten Datensatzes (F1) in einem Speicher eines Servers (SER), der sich auf Messungen (d, δ, α) bezieht, die an dem Träger (w) durchgeführt werden, in Übereinstimmung mit einem ersten Identifikator (ID1),
- Speichern eines zweiten Datensatzes (F2) in dem Speicher des Servers (SER), der sich auf Messungen (R1, R2) bezieht, die an der Brillenfassung (F') durchgeführt werden, in Übereinstimmung mit einem zweiten Identifikator (ID2),
und wobei der Server (SER) bei Empfang einer Information (DOC2), die eine Assoziation zwischen dem ersten und dem zweiten Identifikator angibt, zum Zusammenstellen eines Computerdokuments (ORD(ID1-ID2)) angeordnet ist, das zumindest einen Teil des ersten und des zweiten Datensatzes beinhaltet,
**dadurch gekennzeichnet, dass**:
die Brillenfassung (F'), an der die Messungen durchgeführt werden, mindestens von demselben Modell ist wie eine Brillenfassung (F), die von dem Träger ausprobiert und ausgewählt wurde,
wobei die an dem Träger (w) durchgeführten Messungen (d, a) und die an der Brillenfassung (F') durchgeführten Messungen (R1, R2) jeweils an zwei verschiedenen und entfernten Positionen durchgeführt werden, für die jeweils eine erste Computereinheit (PC1) und eine zweite Computereinheit (PC2) vorgesehen ist, wobei die erste und die zweite Computereinheit mit dem Server (SER) über ein erweitertes Netzwerk verbunden sind,
und der erste Datensatz (F1) Daten bezüglich einer Kombination des Trägers (w) und der gewählten Fassung (F) beinhaltet und mindestens ein Element umfasst, unter:
- einer Höhe (d'1, d'2) zwischen einer Pupille des Trägers und einem horizontalen Rand der gewählten Fassung (F),
- einem Abstand (d1, d2) zwischen einer Pupille des Trägers und einem vertikale Rand der gewählten Fassung (F), und
- einem pantoskopischen Winkel (α) zwischen dem Gesicht des Trägers und der gewählten Fassung (F).

2. Verfahren nach Anspruch 1, wobei der Server (SER) angeordnet ist, um bei einer von einer entfernten Computereinheit (PC3) empfangenen Anforderung (REQ) zum Senden von Daten (EDIT-ORD(ID1-ID2)), die eine Ausgabe des Computerdokuments durch die entfernte Computereinheit (PC3) ermöglichen, an die entfernte Computereinheit (PC3).

3. Verfahren nach Anspruch 2, wobei sich die Computereinheit (PC3) in den Räumlichkeiten eines Optikers befindet und in der Lage ist, bei Empfang der Daten vom Server, die eine Ausgabe des Computerdokuments ermöglichen, ein Bestellformular zu erzeugen, das:
- einerseits sowohl Daten, die sich auf am Träger durchgeführte Messungen beziehen, und
- andererseits Daten, die sich auf an der Brillenfassung durchgeführte Messungen beziehen, beinhalten.

4. Verfahren nach Anspruch 3, wobei die in dem Bestellformular beinhalteten Daten Brillengläser definieren, die beabsichtigt sind, auf der Fassung (F') montiert zu werden, um sie vorzusehen, sowie als Merkmale für das Umranden der Brillengläser.

5. Verfahren nach Anspruch 4, wobei das Bestellformular bei Genehmigung durch den Optiker von dem Server (SER) an eine Computereinheit des Linsenanbieters (PC4) übertragen wird.

6. Verfahren nach einem der vorhergehenden Ansprüche, wobei der erste Datensatz (F1) ferner Daten beinhaltet, die sich nur auf den Träger (w) beziehen, und mindestens ein Element umfasst, unter:
- einem Pupillenabstand (d) des Trägers,
- einer von einem Augenarzt ausgestellte Verordnung des Trägers,
- einem Bewegungskoeffizienten eines Auges im Verhältnis zu einer globalen Bewegung des Kopfes.

7. Verfahren nach einem der vorhergehenden Ansprüche, wobei der erste Datensatz (F1) zusammen mit dem ersten Identifikator (ID1) und einem Identifikator eines Modells der gewählten Fassung (Mod F) an den Server (SER) gesendet wird (DOC1).

8. Verfahren nach einem der vorhergehenden Ansprüche, wobei die ersten und zweiten Brillengläser beabsichtigt sind, auf entsprechenden ersten (R1) und zweiten (R2) Rahmen der Brillenfassung (F') montiert werden, um sie vorzusehen, wobei der zweite Datensatz (F2) mindestens ein Element umfasst, unter:
- einer Messung des Innenumfangs der ersten und zweiten Rahmen,
- einer Messung der Abmessungen einer im Innenumfang der Rahmen ausgebildeten inneren Kerbe,
- einer Messung des Winkels zwischen einer Hauptachse der Kerbe und einer Hauptachse eines Rahmens.

9. Verfahren nach Anspruch 8, wobei der zweite Datensatz (F2) zusammen mit dem ersten (ID1) und dem zweiten (ID2) Identifikator an den Server (SER) gesendet wird (DOC2) und somit die Information vorsieht, die eine Assoziation zwischen dem ersten und dem zweiten Identifikator angibt.

10. Verfahren nach einem der vorhergehenden Ansprüche, wobei:
- die erste Computereinheit (PC1) den ersten Datensatz (F1) zusammen mit dem ersten Identifikator (ID1) und einem Identifikator eines Modells einer vom Träger ausprobierten und ausgewählten Fassung (Mod F) an den Server (SER) sendet,
- die zweite Computereinheit (PC2) den ersten Identifikator (ID1) zusammen mit dem Identifikator der ausgewählten Fassung (Mod F) aus dem Server wiederherstellt,
- die zweite Einheit (PC2) auf der Grundlage des Identifikators der ausgewählten Fassung (Mod F) Messungen an einer dem Träger (w) vorzusehende Fassung (F') anordnet, wobei die vorzusehende Fassung (F') mindestens ein gleiches Modell wie die vom Träger ausprobierte und ausgewählte Fassung (F) aufweist, und
- die zweite Computereinheit (PC2) den zweiten Datensatz (F2) zusammen mit dem ersten (ID1) und dem zweiten (ID2) Identifikator an den Server (SER) sendet und somit dem Server die Information vorsieht, die eine Assoziation zwischen dem ersten und dem zweiten Identifikator angibt.

11. Server zum Implementieren des Verfahrens nach einem der vorhergehenden Ansprüche, umfassend:
* einen Speicher zum Speichern:
- einen ersten Datensatz (F1-ID1), der sich auf Messungen (d, α) bezieht, die an dem Träger (w) in Übereinstimmung mit einem ersten Identifikator (ID1) durchgeführt wurden, und
- einen zweiten Datensatz (F2-ID2), der sich auf Messungen (R1, R2) bezieht, die an der Brillenfassung (F') in Übereinstimmung mit einem zweiten Identifikator (ID2) durchgeführt wurden,
* und Verarbeitungsmittel, die angepasst sind, um bei Empfang einer Information (DOC2), die eine Assoziation zwischen dem ersten und dem zweiten Identifikator angibt, ein Computerdokument (ORD(ID1-ID2)) zusammenzustellen, das mindestens den ersten und den zweiten Datensatz beinhaltet.

12. Softwareprodukt, das angepasst ist, um in einem Speicher einer Prozessoreinheit eines Servers nach Anspruch 11 oder in einem entfernbaren Speichermedium gespeichert zu werden, das angepasst ist, um mit einem Lesegerät der Prozessoreinheit des Servers zusammenzuarbeiten,
die Anweisungen zum Implementieren des Verfahrens nach einem der Ansprüche 1 bis 10 umfasst.

13. Softwareprodukt, das angepasst ist, um in einem Speicher einer Prozessoreinheit eine Computereinheit oder in einem entfernbaren Speichermedium gespeichert zu werden, das angepasst ist, um mit einem Lesegerät der Prozessoreinheit der Computereinheit zusammenzuarbeiten, die Anweisungen zum Implementieren des Verfahrens nach einem der Ansprüche 2, 3, 4, 5, 7, 9 und 10 umfasst.

14. System zum Implementieren des Verfahrens nach einem der Ansprüche 1 bis 10, umfassend einen Server nach Anspruch 11 und mindestens eine Computereinheit (PC1, PC2, PC3), die Anweisungen zum Implementieren des Verfahrens nach einem der Ansprüche 1 bis 10 umfasst.

## Revendications

1. Procédé mis en œuvre par des moyens informatiques, pour fournir un document informatique représentant une monture de lunettes (F') adaptée à un futur porteur (w) de ladite monture de lunettes,
le procédé comprenant les étapes de :
- stockage dans une mémoire d'un serveur (SER) d'un premier ensemble de données (F1) relatif à des mesures (d, δ, α) effectuées sur ledit porteur (w), en correspondance avec un premier identifiant (ID1),
- stockage dans la mémoire dudit serveur (SER) d'un deuxième ensemble de données (F2) relatif à des mesures (R1, R2) effectuées sur ladite monture de lunettes (F'), en correspondance avec un deuxième identifiant (ID2), et dans lequel le serveur (SER), lors de la réception d'une information (DOC2) indiquant une association entre lesdits premier et deuxième identifiants, est conçu pour compiler un document informatique (ORD(ID1-ID2)) incluant au moins une partie desdits premier et deuxième ensembles de données,
**caractérisé en ce que** :
ladite monture de lunettes (F') sur laquelle les mesures sont effectuées est au moins d'un modèle identique à celui d'une monture de lunettes (F) essayée et choisie par ledit porteur,
lesdites mesures (d, α) effectuées sur ledit porteur (w) et lesdites mesures (R1, R2) effectuées sur ladite monture de lunettes (F') étant respectivement exécutées en deux lieux distincts et distants, respectivement dotés d'une première entité informatique (PC1) et d'une deuxième entité informatique (PC2), lesdites première et deuxième entités informatiques étant connectées audit serveur (SER) via un réseau étendu,
et ledit premier ensemble de données (F1) incluant des données relatives à une combinaison du porteur (w) et de ladite monture choisie (F) et comprenant au moins un élément parmi :
- une hauteur (d'1, d'2) entre une pupille du porteur et un bord horizontal de ladite monture choisie (F),
- une distance (d1, d2) entre une pupille du porteur et un bord vertical de ladite monture choisie (F), et
- un angle pantoscopique (α) entre le visage du porteur et ladite monture choisie (F).

2. Procédé selon la revendication 1, dans lequel ledit serveur (SER) est conçu pour, lors de la réception d'une demande (REQ) en provenance d'une entité informatique distante (PC3), envoyer à ladite entité informatique distante (PC3) des données (EDIT-ORD (ID1-ID2)) permettant une édition dudit document informatique par ladite entité informatique distante (PC3).

3. Procédé selon la revendication 2, dans lequel ladite entité informatique (PC3) est située dans les locaux d'un opticien et est capable de générer, lors de la réception en provenance du serveur desdites données permettant une édition dudit document informatique, un formulaire de commande incluant :
- d'une part, des données relatives aux mesures effectuées sur l'utilisateur, et
- d'autre part, des données relatives aux mesures effectuées sur la monture de lunettes.

4. Procédé selon la revendication 3, dans lequel les données incluses dans ledit formulaire de commande définissent des verres de lunettes destinés à être montés sur ladite monture (F') à fournir, ainsi que des caractéristiques de bordure desdits verres de lunettes.

5. Procédé selon la revendication 4, dans lequel ledit formulaire de commande, sur autorisation de l'opticien, est transmis par ledit serveur (SER) à une entité informatique d'un fournisseur de verre (PC4).

6. Procédé selon l'une quelconque des revendications précédentes, dans lequel ledit premier ensemble de données (F1) inclut en outre des données relatives uniquement au porteur (w) et comprend au moins un élément parmi :
- une distance pupillaire (d) du porteur,
- une ordonnance du porteur remplie par un ophtalmologiste,
- un coefficient de mouvement d'un œil par rapport à un mouvement global de la tête.

7. Procédé selon l'une quelconque des revendications précédentes, dans lequel ledit premier ensemble de données (F1) est envoyé (DOC1) au serveur (SER) avec ledit premier identifiant (ID1) et un identifiant d'un modèle de ladite monture choisie (Mod F).

8. Procédé selon l'une quelconque des revendications précédentes, dans lequel les premier et deuxième verres de lunettes sont destinés à être montés dans des premier (R1) et deuxième (R2) cerclages de la monture de lunettes à fournir (F'), ledit deuxième ensemble de données (F2) comprenant au moins un élément parmi :
- une mesure de circonférence interne desdits premier et deuxième cerclages,
- une mesure de dimension d'une rainure interne formée dans ladite circonférence interne des cerclages,
- une mesure d'un angle entre un axe principal de ladite rainure et un axe principal d'un cerclage.

9. Procédé selon la revendication 8, dans lequel ledit deuxième ensemble de données (F2) est envoyé (DOC2) audit serveur (SER) avec lesdits premier (ID1) et deuxième (ID2) identifiants, fournissant donc ladite information indiquant une association entre lesdits premier et deuxième identifiants.

10. Procédé selon l'une quelconque des revendications précédentes, dans lequel :
- la première entité informatique (PC1) envoie le premier ensemble de données (F1) au serveur (SER) avec ledit premier identifiant (ID1) et un identifiant d'un modèle d'une monture essayée et choisie par le porteur (Mod F),
- la deuxième entité informatique (PC2) récupère auprès du serveur ledit premier identifiant (ID1) avec l'identifiant de ladite monture choisie (Mod F),
- en fonction dudit identifiant de la monture choisie (Mod F), la deuxième entité informatique (PC2) commande des mesures sur une monture (F') à fournir au porteur (w), ladite monture (F') à fournir étant au moins d'un modèle identique à celui de la monture (F) essayée et choisie par l'utilisateur, et
- la deuxième entité informatique (PC2) envoie ledit deuxième ensemble de données (F2) au serveur (SER) avec lesdits premier (ID1) et deuxième (ID2) identifiants, fournissant donc au serveur ladite information indiquant une association entre lesdites premier et deuxième identifiants.

11. Serveur pour la mise en œuvre du procédé selon l'une quelconque des revendications précédentes, comprenant :
* une mémoire pour stocker :
- un premier ensemble de données (F1-ID1) relatif à des mesures (d, α) effectuées sur ledit porteur (w), en correspondance avec un premier identifiant (ID1), et
- un deuxième ensemble de données (F2-ID2) relatif à des mesures (R1, R2) effectuées sur ladite monture de lunettes (F'), en correspondance avec un deuxième identifiant (ID2),
* et des moyens de traitement conçus pour, lors de la réception d'une information (DOC2) indiquant une association entre lesdits premier et deuxième identifiants, compiler un document informatique (ORD(ID1-ID2)) incluant au moins lesdits premier et deuxième ensembles de données.

12. Produit logiciel conçu pour être stocké dans une mémoire d'une unité de traitement d'un serveur selon la revendication 11, ou sur un support de stockage amovible conçu pour coopérer avec un lecteur de l'unité de traitement du serveur,
comprenant des instructions pour la mise en œuvre du procédé selon l'une quelconque des revendications 1 à 10.

13. Produit logiciel conçu pour être stocké dans une mémoire d'une unité de traitement d'une unité informatique, ou sur un support de stockage amovible conçu pour coopérer avec un lecteur de l'unité de traitement de l'unité informatique,
comprenant des instructions pour la mise en œuvre du procédé selon l'une quelconque des revendications 2, 3, 4, 5, 7, 9 et 10.

14. Système pour la mise en œuvre du procédé selon l'une quelconque des revendications 1 à 10, comprenant un serveur selon la revendication 11 et au moins une entité informatique (PC1, PC2, PC3) comprenant des instructions pour la mise en œuvre du procédé selon l'une quelconque des revendications 1 à 10.
